# EUROPÄISCHE PATENTSCHRIFT

(11) **EP 1 970 293 B1**
(45) Veröffentlichungstag und Bekanntmachung des Hinweises auf die Patenterteilung: **31.08.2011**
(21) Anmeldenummer: 08003416.8
(22) Anmeldetag: 26.02.2008
(51) Int. Cl.: B62D 33/06

(54) **Fahrzeug**
Vehicle
Véhicule

(30) Priorität: 15.03.2007 DE 102007013241
(43) Veröffentlichungstag der Anmeldung: 17.09.2008
(73) Patentinhaber: Carl Freudenberg KG, 69469 Weinheim (DE)
(72) Erfinder: Erl, Andreas, 16761 Henningsdorf (DE); Gürtler, Daniel, 12057 Berlin (DE); Hack, Rüdiger, 10713 Berlin (DE); Joske, Tino, 16761 Henningsdorf (DE); Aspin, Thomas Steven, Hatton Derbyshire DE65 5QQ (GB)

(56) Entgegenhaltungen:
- EP-A- 0 943 532
- WO-A-91/13776
- US-A- 5 368 118
- US-B1- 6 206 121

## Beschreibung

### Technisches Gebiet

Die Erfindung betrifft ein Fahrzeug mit einem Rahmen und einer Kabine, die über federnde und/oder dämpfende Lager miteinander verbunden sind.

### Stand der Technik

Die Kabine eines Fahrzeugs, insbesondere einer Land- oder Baumaschine, kann durch verschiedene Lagerungen am Rahmen befestigt werden. Die Lagerung soll möglichst weich sein, um eine hohe Schwingungsisolation zu erreichen. Bei einer weichen Lagerung ist jedoch problematisch, dass die Kabine bei Beschleunigungsvorgängen zu pendelartigen Bewegungen neigt. Dabei werden Pendelbewegungen in Querrichtung der Kabine als Wanken bezeichnet und Pendelbewegungen in Längsrichtung der Kabine als Nicken bezeichnet. Wankbewegungen entstehen insbesondere bei Kurvenfahrten und Nickbewegungen entstehen insbesondere durch Beschleunigungs- und Bremsvorgänge. Zur Vermeidung von Wankbewegungen ist es bekannt, die Kabine durch Wankstützen zu stabilisieren. Eine Reduzierung der Nickbewegungen ist insbesondere bei kurzen Kabinen bislang nur durch aufwendige Maßnahmen möglich.

Die EP 0 943 532 offenbart eine solche Fahrzeugkabine.

### Darstellung der Erfindung

Der Erfindung liegt die Aufgabe zugrunde, ein Fahrzeug mit einer einfachen Einrichtung zur Reduzierung der Pendelbewegungen auszurüsten.

Diese Aufgabe wird mit den Merkmalen von Anspruch 1 gelöst. Auf vorteilhafte Ausgestaltungen nehmen die Unteransprüche Bezug.

Zur Lösung der Aufgabe ist zwischen Rahmen und Kabine zumindest ein Stab derartig gelenkig mit dem Rahmen und der Kabine angeordnet, dass die Pendelbewegung der Kabine reduziert ist. Die Stäbe weisen an beiden Enden Gelenke auf, wobei die Stäbe vorzugsweise durch Gummibuchsen an Rahmen und Kabine abgestützt sind. Die Gummibuchsen lassen Bewegungen in radialer und axialer Richtung sowie Drehbewegungen zu, wobei diese Bewegungen durch das Gummi gedämpft werden. Dadurch sind Kabine und Rahmen schwingungsentkoppelt. Die Stäbe begrenzen den Weg der Kabine und geben je nach Anordnung und Ausbildung eine Bewegung der Kabine vor, die so ausgebildet ist, dass bevorzugt Nickbewegungen aber auch andere Pendelbewegungen wie Wanken oder Gieren begrenzt sind. Gleichzeitig ist die Kabine weich gelagert, so dass sich ein komfortables Fahrgefühl ergibt. Als Lager kommen insbesondere Konuslager, Keillager, Hydrolager, Hydrobuchsen oder Luftfedern in Betracht. Der Stab kann gleichzeitig eine Abreißsicherung bilden, die das Abreißen der Kabine verhindert, wenn die vertikalen Kräfte so groß werden sollten, dass die Lager versagen. Der Stab kann auch als Dreieckslenker oder X-Lenker ausgebildet sein.

Der Stab kann dem Lager zugeordnet sein. Dadurch verringert sich der notwendige Bauraum und Stab und Lager können so aufeinander abgestimmt werden, dass sich eine besonders vorteilhafte Reduzierung der Pendelbewegungen ergibt.

Der Stab kann gelenkig mit dem Abschnitt des Lagers verbunden sein, der starr an dem Rahmen oder der Kabine befestigt ist. Das Lager weist einen Abschnitt auf, der mit dem Rahmen verbunden ist, dieser Abschnitt wird auch als Auflager bezeichnet. Ein anderer Abschnitt ist mit der Kabine verbunden, dieser Abschnitt wird auch als Traglager bezeichnet. Auflager und Traglager sind zueinander beweglich und beispielsweise durch einen Elastomerkörper miteinander verbunden.

Je Lager können zwei Stäbe vorgesehen sein, die gelenkig mit dem Lager und der Kabine verbunden sind. In anderen Ausgestaltungen können die Stäbe zwischen Rahmen und Kabine oder auch zwischen Lager und Rahmen angeordnet sein. In allen Fällen findet zwischen Lager und Stab eine Wechselwirkung statt. Durch diese Ausgestaltungen ergibt sich eine Viergelenkkette, die so ausgelegt ist, dass die Pendelbewegungen der Kabine begrenzt sind. Hierbei ist vorteilhaft, dass nur wenig Bauraum benötigt wird.

Das Lager kann starr mit dem Rahmen oder der Kabine verbunden sein, wobei das Traglager oder das Auflager des Lagers beabstandet zu den Gelenken des Stabes mit dem Stab verbunden ist. Hier ist als Bezugssystem der Rahmen zu verstehen. Das bedeutet, dass sich die Kabine relativ zu dem Rahmen bewegt, wobei diese Bewegung durch das Lager begrenzt und durch ein Feder/Dämpfersystem gedämpft wird.

Die Stäbe können im Wesentlichen in Fahrtrichtung ausgerichtet sein. Bei einer derartigen Ausrichtung ergibt ein besonders vorteilhafter Nickausgleich. Es sind auch andere Ausrichtungen denkbar, um beispielsweise Wanken und Gieren besser kompensieren zu können.

Es können zumindest zwei Lager vorgesehen sein. Bei Verwendung von nur zwei Lagern ergibt sich eine sichere Abstützung durch Verwendung eines zusätzlichen Stützstabes. Bei Verwendung von drei Lagern ergibt sich bereits eine sichere Abstützung, wobei bei Verwendung von vier Lagern eine gleichmäßige Federung in Längs- und Querrichtung ergibt.

Die Lager und die Stäbe können jeweils eine vormontierbare Einheit bilden. Dazu können die Lager und die Stäbe mit Montageplatten verbunden sein. Dadurch vereinfacht sich die Montage, da es dann lediglich erforderlich ist, die Einheit am Rahmen zu befestigen und anschließend die Kabine an der Einheit zu befestigen.

Zwei Stäbe können über eine Drehstabfeder miteinander wirkverbunden sein. Die Drehstabfeder wirkt dabei wie ein Stabilisator, der aus dem Automobilbau zur Begrenzung der Fahrzeugneigung bei Kurvenfahrten bekannt ist. Bei einem Beschleunigungsvorgang übt die Kabine eine Druckkraft auf einen Stab und gleichzeitig eine Zugkraft auf den anderen Stab aus. Dies führt zu einer Verdrehung der Drehstabfeder und damit zu einer Gegenkraft die jeweils der Druckkraft und der Zugkraft entgegen wirkt. Dadurch werden die Pendelbewegungen besonders effektiv und mit einfachen Mitteln begrenzt. Die Drehstabfeder kann U-förmig ausgebildet sein, wobei die Stäbe an den freien Enden angreifen und so eine Auf- und Abwärtsbewegung der Stäbe in eine Verdrehung der Basis des U-Schenkels der Drehstabfeder umgesetzt wird. In anderen Ausgestaltungen kann die Drehstabfeder auch stabförmig ausgebildet sein. Hierbei sind an der Drehstabfeder Umlenkhebel drehfest angeordnet, die winklig zu den Stäben angeordnet und gelenkig mit diesen verbunden sind.

Die Stäbe können jeweils gelenkig mit der Kabine und der Drehstabfeder verbunden sein. Dadurch ist sicher gestellt, dass im Wesentlichen nur Zug- und Druckkräfte in die Drehstabfeder eingeleitet werden. Die Querkräfte werden größtenteils in den Lagern abgeleitet auf die die Kabine montiert ist.

Die Drehstabfeder kann drehbar am Rahmen gelagert sein. Dadurch ergibt sich eine größtmögliche Kraftübertragung auf die über die Drehstabfeder verbundenen Stäbe.

Es können zwei Drehstabfedern vorgesehen sein, die mit jeweils zwei Stäben verbunden sind. Die beiden Drehstabfedern sind voneinander beabstandet und so zueinander ausgerichtet, dass sich eine optimale Kompensation der die Pendelbewegungen auslösenden Kräfte ergibt.

Die Drehstabfedern können im Wesentlichen in Fahrtrichtung ausgerichtet sein oder einander kreuzen. Sind die Drehstabfedern in Fahrtrichtung ausgerichtet, ergibt sich eine besonders wirksame Begrenzung der Nickbewegungen. Sind die Drehstabfedern gekreuzt können gleichzeitig Nick- und Wankbewegungen ausgeglichen werden. Es sind auch Anordnungen denkbar, bei denen die Drehstabfedern unter einem anderen Winkel zueinander angeordnet sind. Dabei werden dann je nach Anordnung überwiegend entweder Nick- oder Pendelbewegungen kompensiert.

Jede Drehstabfeder kann in Gummilagern am Rahmen gelagert sein. Gummilager bewirken eine Schwingungsentkopplung, wobei die Gummilager eine Verdrehung der Drehstabfeder zulassen.

Die Stäbe, die Drehstabfeder und die Gummilager können eine weitere vormontierbare Einheit bilden. Dazu können die Drehstabfedern und die Stäbe zwischen Montageplatten befestigt sein. Dadurch vereinfacht sich die Montage, da es dann lediglich erforderlich ist, die Einheit mit den Drehstabfedern und den Stäben am Rahmen zu befestigen und anschließend die Kabine an der Einrichtung zu befestigen.

Ferner kann die Einheit ein Lager umfassen. Dadurch ergibt sich eine besonders kompakte Einheit die alle Gegenstände umfasst, die zur Schwingungsdämpfung zwischen Rahmen und Kabine benötigt werden, wodurch sich die Montage vereinfacht.

Die Stäbe können in Gummibuchsen gelagert sein. Dabei können die Gummibuchsen so ausgebildet sein, dass die Stäbe in axialer und radialer Richtung beweglich sind und ein Kardanikausgleich möglich ist. Damit ist die Herstellung einer besonders effektiven und komfortablen Einrichtung zum Pendelausgleich möglich.

### Kurzbeschreibung der Zeichnung

Einige Ausführungsbeispiele des erfindungsgemäßen Fahrzeugs werden nachfolgend anhand der Figuren näher erläutert. Diese zeigen, jeweils schematisch:
- Fig. 1: ein Fahrzeug mit Lager und zugeordnetem Stab;
- Fig. 2: ein Fahrzeug mit Lager und jeweils zwei zugeordneten Stäben;
- Fig. 3: ein Fahrzeug mit Lager, welches an dem Stab beabstandet zu den Gelenken angreift
- Fig. 4: ein Fahrzeug mit einer Drehstabfeder in U-Form;
- Fig. 5: ein Fahrzeug mit einer stabförmigen Drehstabfeder.

### Ausführung der Erfindung

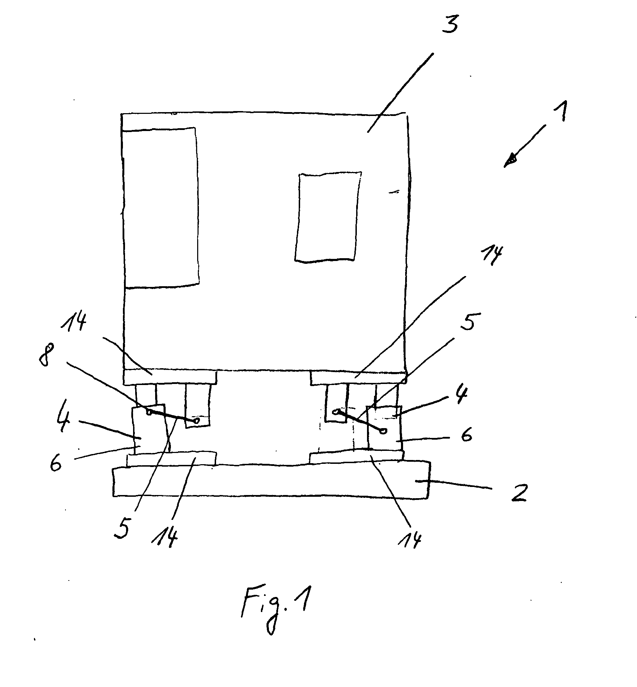

Figur 1 zeigt ein Fahrzeug 1, eine Land- oder Baumaschine, mit einem Rahmen 2 und einer Kabine 3, die über federnde und dämpfende Lager 4, hier Hydrolager, miteinander verbunden sind. Dazu sind vier Lager 4 vorgesehen, die hier als Hydrolager ausgebildet sind. Zwischen Rahmen 2 und Kabine 3 ist je Lager 4 ein Stab 5 derartig gelenkig mit dem Rahmen 2 und der Kabine 3 angeordnet, dass die Pendelbewegung der Kabine 3 reduziert ist. Dazu ist jeder Stab 5 jeweils einem Lager 4 zugeordnet und gelenkig mit dem Abschnitt 6 des Lagers 4 verbunden ist, der starr an dem Rahmen 2 oder in anderen Ausführungen an der Kabine 3 befestigt ist.

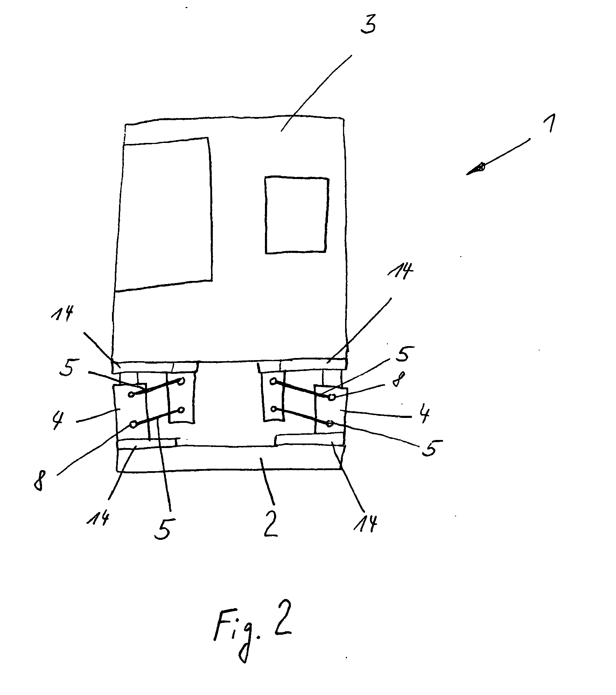

Figur 2 zeigt eine Ausgestaltung gemäß Figur 1, wobei je Lager 4 zwei Stäbe 5 vorgesehen sind, die gelenkig mit dem Lager 4 und der Kabine 3 verbunden sind.

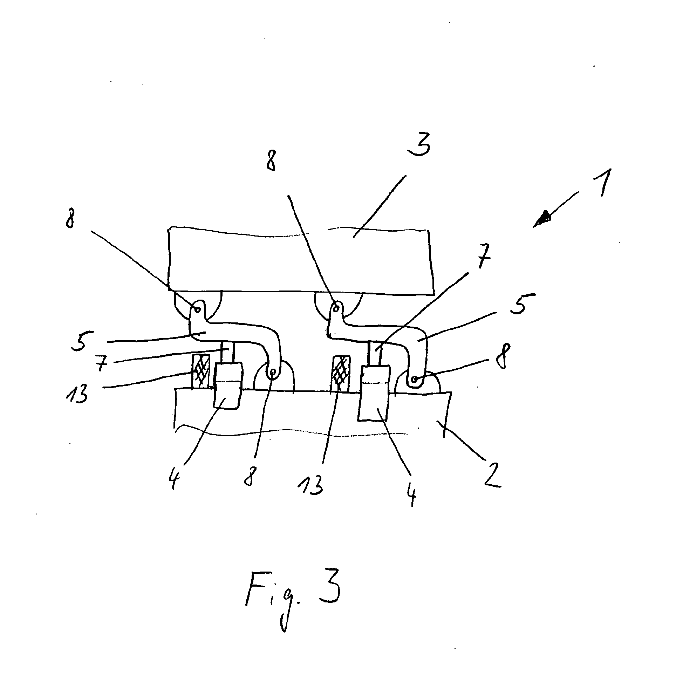

Figur 3 zeigt eine Ausgestaltung gemäß Figur 1, wobei das Lager 4 starr mit dem Rahmen 2 oder der Kabine 3 verbunden ist, wobei das bewegliche Auflager 7 des Lagers 4 beabstandet zu den Gelenken 8 des Stabes 5 mit dem Stab 5 verbunden ist. An dem Rahmen 2 ist zusätzlich ein Anschlagpuffer 13 vorgesehen, durch den starke Stöße abgefangen werden, indem dann der Stab 5 jeweils an dem Anschlagpuffer 13 anschlägt.

Die Stäbe gemäß den Ausführungen der Figuren 1 bis 3 bilden gleichzeitig eine Abreißsicherung, die ein Abreißen der Kabine bei starken Belastungen verhindert. Des Weiteren sind die Stäbe 5 im Wesentlichen parallel zur Fahrtrichtung ausgerichtet. Die Lager 4 und die Stäbe 5 bilden jeweils eine vormontierbare Einheit 8, wobei die Lager 4 und die Stäbe 5 an Platten 14 befestigt sind, die zur Montage an Rahmen 2 oder Kabine 3 vorbereitet sind.

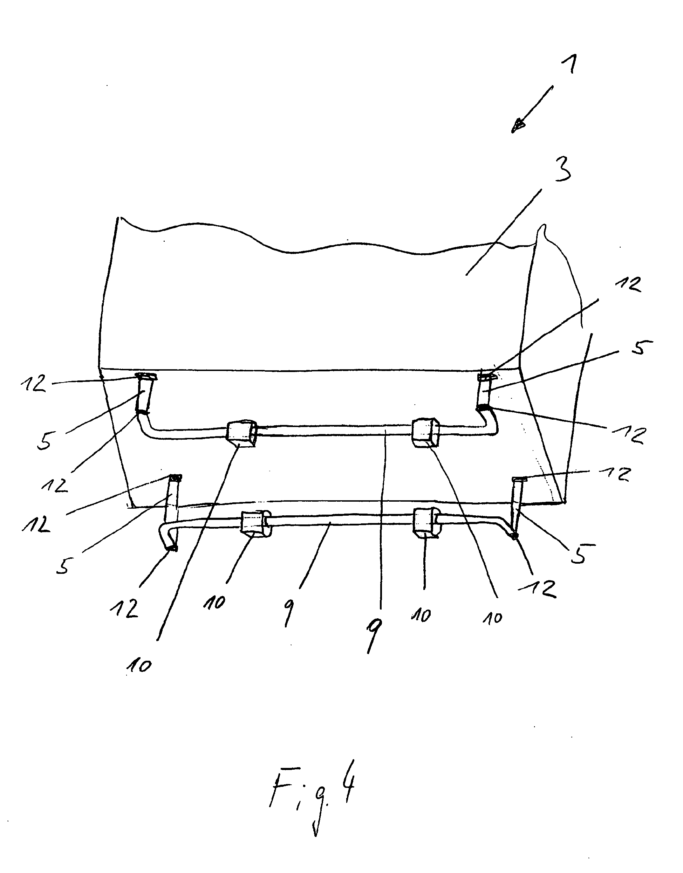

Figur 4 zeigt eine weitere Ausführungsform. Hier sind jeweils zwei Stäbe 5 über eine Drehstabfeder 9 miteinander wirkverbunden, wobei die Stäbe 5 jeweils über Gummibuchsen 12 gelenkig mit der Kabine 3 und der Drehstabfeder 9 verbunden sind und die Drehstabfeder 9 drehbar am Rahmen 2 gelagert ist. In dieser Ausgestaltung sind zwei Drehstabfedern 9 vorgesehen, die mit jeweils zwei Stäben 5 verbunden sind. Dabei sind die Drehstabfedern 9 im Wesentlichen in Fahrtrichtung ausgerichtet. In anderen Ausgestaltungen können die Drehstabfedern 9 einander kreuzen oder in einem Winkel zueinander angeordnet sein. Jede Drehstabfeder 9 ist in Gummilagern 10 am Rahmen 2 gelagert. Die Drehstabfedern 9 weisen hier eine U-förmige Kontur auf, wobei die Stäbe 5 an den freien Enden der Schenkel der Drehstabfedern 9 angreifen.

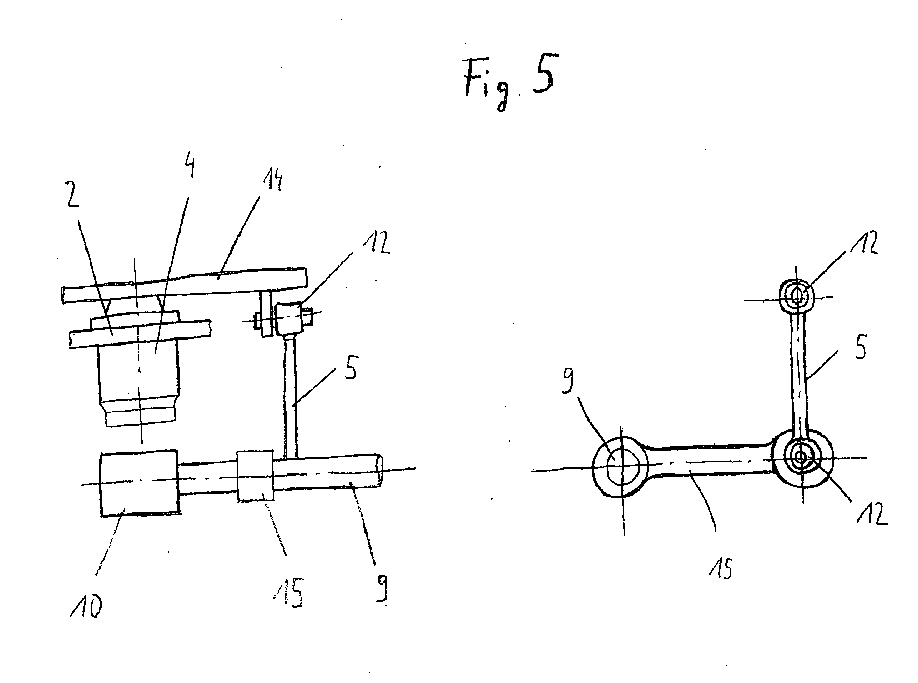

Figur 5 zeigt eine weitere Ausgestaltung einer Drehstabfederanordnung gemäß Figur 4. Die Drehstabfeder 9 ist hier stabförmig ausgebildet und die Stäbe 5 greifen über Umlenkhebel 15, die drehfest an den Drehstabfedern 9 befestigt sind, aber gelenkig mit den Stäben 5 verbunden sind, an den Drehstabfedern 9 an. Die Stäbe 5, die Drehstabfeder 9 und die Gummilager 10 sowie die Lager 4 bilden eine weitere vormontierbare Einheit 11. Auf den Lagern 4 sind dazu Platten 14 angeordnet, die zur Befestigung an der Kabine 3 vorbereitet sind.

## Patentansprüche

1. Fahrzeug (1) mit einem Rahmen (2) und einer Kabine (3), die über federnde und/oder dämpfende Lager (4) miteinander verbunden sind, wobei zwischen Rahmen (2) und Kabine (3) zumindest ein Stab (5) derartig gelenkig mit dem Rahmen (2) und der Kabine (3) angeordnet ist, dass die Pendelbewegung der Kabine (3) reduziert ist, wobei der Stab (5) dem Lager (4) zugeordnet ist, wobei der Stab (5) gelenkig mit dem Abschnitt (6) des Lagers (4) verbunden ist, der starr an dem Rahmen (2) oder der Kabine (3) befestigt ist, **dadurch gekennzeichnet, dass** je Lager (4) zwei Stäbe (5) vorgesehen sind, die gelenkig mit dem Lager (4) und der Kabine (3) verbunden sind.

2. Fahrzeug (1) mit einem Rahmen (2) und einer Kabine (3), die über federnde und/oder dämpfende Lager (4) miteinander verbunden sind, wobei zwischen Rahmen (2) und Kabine (3) zumindest ein Stab (5) derartig gelenkig mit dem Rahmen (2) und der Kabine (3) angeordnet ist, dass die Pendelbewegung der Kabine (3) reduziert ist, wobei der Stab (5) dem Lager (4) zugeordnet ist, **dadurch gekennzeichnet, dass** das Lager (4) starr mit dem Rahmen (2) oder der Kabine (3) verbunden ist, wobei das bewegliche Auflager (7) des Lagers (4) beabstandet zu den Gelenken (8) des Stabes (5) mit dem Stab (5) verbunden ist.

3. Fahrzeug nach Anspruch 1 oder 2, **dadurch gekennzeichnet, dass** die Stäbe (5) im Wesentlichen parallel zur Fahrtrichtung ausgerichtet sind.

4. Fahrzeug nach einem der Ansprüche 1 bis 3, **dadurch gekennzeichnet, dass** zumindest zwei Lager (4) vorgesehen sind.

5. Fahrzeug nach einem der Ansprüche 1 bis 4, **dadurch gekennzeichnet, dass** die Lager (4) und die Stäbe (5) jeweils eine vormontierbare Einheit (8) bilden.

6. Fahrzeug nach Anspruch 1, **dadurch gekennzeichnet, dass** zwei Stäbe (5) über eine Drehstabfeder (9) miteinander wirkverbunden sind

7. Fahrzeug nach Anspruch 1, **dadurch gekennzeichnet, dass** die Stäbe (5) jeweils gelenkig mit der Kabine (3) und der Drehstabfeder (9) verbunden sind.

8. Fahrzeug nach Anspruch 6 oder 7, **dadurch gekennzeichnet, dass** die Drehstabfeder (9) drehbar am Rahmen (2) gelagert ist.

9. Fahrzeug nach einem der Ansprüche 6 bis 8, **dadurch gekennzeichnet, dass** zwei Drehstabfedern (9) vorgesehen sind, die mit jeweils zwei Stäben (5) verbunden sind.

10. Fahrzeug nach Anspruch 9, **dadurch gekennzeichnet, dass** die Drehstabfedern (9) im Wesentlichen in Fahrtrichtung ausgerichtet sind oder einander kreuzen.

11. Fahrzeug nach einem der Ansprüche 6 bis 10, **dadurch gekennzeichnet, dass** jede Drehstabfeder (9) in Gummilagern (10) am Rahmen (2) gelagert ist.

12. Fahrzeug nach Anspruch 11, **dadurch gekennzeichnet, dass** die Stäbe (5), die Drehstabfeder (9) und die Gummilager (10) eine weitere vormontierbare Einheit (11) bilden.

13. Fahrzeug nach Anspruch 12, **dadurch gekennzeichnet, dass** die Einheit (11) zumindest ein Lager (4) umfasst.

14. Fahrzeug nach einem der Ansprüche 1 bis 13, **dadurch gekennzeichnet, dass** die Stäbe (5) in Gummibuchsen (12) gelagert sind.

## Claims

1. Vehicle (1) with a frame (2) and a cab (3), which are connected to each other via resilient and/or damping bearings (4), wherein, between frame (2) and cab (3), at least one rod (5) is arranged in an articulated manner with the frame (2) and the cab (3) such that the oscillating movement of the cab (3) is reduced, wherein the rod (5) is assigned to the bearing (4), and wherein the rod (5) is connected in an articulated manner to that portion (6) of the bearing (4) which is fastened rigidly to the frame (2) or the cab (3), **characterized in that** two rods (5) are provided per bearing (4) and are connected to the bearing (4) and the cab (3) in an articulated manner.

2. Vehicle (1) with a frame (2) and a cab (3), which are connected to each other via resilient and/or damping bearings (4), wherein, between frame (2) and cab (3), at least one rod (5) is arranged in an articulated manner with the frame (2) and the cab (3) such that the oscillating movement of the cab (3) is reduced, wherein the rod (5) is assigned to the bearing (4), **characterized in that** the bearing (4) is connected rigidly to the frame (2) or the cab (3), the moveable support (7) of the bearing (4) being connected to the rod (5) at a distance from the joints (8) of the rod (5).

3. Vehicle according to Claim 1 or 2, **characterized in that** the rods (5) are oriented substantially parallel to the direction of travel.

4. Vehicle according to one of Claims 1 to 3, **characterized in that** at least two bearings (4) are provided.

5. Vehicle according to one of Claims 1 to 4, **characterized in that** the bearings (4) and the rods (5) in each case from a preassembled unit (8).

6. Vehicle according to Claim 1, **characterized in that** two rods (5) are operatively connected to each other via a torsion bar spring (9).

7. Vehicle according to Claim 1, **characterized in that** the rods (5) are each connected in an articulated manner to the cab (3) and the torsion bar spring (9).

8. Vehicle according to Claim 6 or 7, **characterized in that** the torsion bar spring (9) is mounted rotatably on the frame (2).

9. Vehicle according to one of Claims 6 to 8, **characterized in that** two torsion bar springs (9) connected to in each case two rods (5) are provided.

10. Vehicle according to Claim 9, **characterized in that** the torsion bar springs (9) are oriented substantially in the direction of travel or cross each other.

11. Vehicle according to one of Claims 6 to 10, **characterized in that** each torsion bar spring (9) is mounted in rubber bearings (10) on the frame (2).

12. Vehicle according to Claim 11, **characterized in that** the rods (5), the torsion bar springs (9) and the rubber bearings (10) form a further preassembled unit (11).

13. Vehicle according to Claim 12, **characterized in that** the unit (11) comprises at least one bearing (4).

14. Vehicle according to one of Claims 1 to 13, **characterized in that** the rods (5) are mounted in rubber bushings (12).

## Revendications

1. Véhicule (1) équipé d'un châssis (2) et d'une cabine (3) reliés entre eux par le biais d'un palier (4) élastique et/ou amortissant, au moins une barre (5) étant disposée de façon articulée au châssis (2) et à la cabine (3), entre le châssis (2) et la cabine (3), de façon à réduire le mouvement pendulaire de la cabine (3), la barre (5) étant associée au palier (4), la barre (5) étant reliée de façon articulée à la section (6) du palier (4), elle-même reliée de façon rigide au châssis (2) ou à la cabine (3), **caractérisé en ce que** deux barres (5) sont prévues pour chaque palier, lesdites barres étant reliées de façon articulée au palier (4) et à la cabine (3).

2. Véhicule (1) équipé d'un châssis (2) et d'une cabine (3) reliés entre eux par le biais d'un palier (4) élastique et/ou amortissant, au moins une barre (5) étant disposée de façon articulée au châssis (2) et à la cabine (3), entre le châssis (2) et la cabine (3), de façon à réduire le mouvement pendulaire de la cabine (3), la barre (5) étant associée au palier (4), **caractérisé en ce que** le palier (4) est relié de façon rigide au châssis (2) ou à la cabine (3), la butée (7) mobile du palier (4) étant reliée à la barre (5) à une certaine distance des articulations (8) de la barre (5).

3. véhicule selon la revendication 1 ou 2, **caractérisé en ce que** les barres (5) sont orientées pour l'essentiel parallèlement à la direction de conduite.

4. Véhicule selon l'une quelconque des revendications 1 à 3, **caractérisé en ce qu'**au moins deux paliers (4) sont prévus.

5. Véhicule selon l'une quelconque des revendications 1 à 4, **caractérisé en ce que** les paliers (4) et les barres (5) forment respectivement une unité (8) montable à l'avance.

6. Véhicule selon la revendication 1, **caractérisé en ce que** deux barres (5) sont reliées entre elles de façon active par le biais d'un ressort à barre de torsion (9).

7. Véhicule selon la revendication 1, **caractérisé en ce que** les barres (5) sont respectivement reliées de façon articulée à la cabine (3) et au ressort à barre de torsion (9).

8. Véhicule selon la revendication 6 ou 7, **caractérisé en ce que** le ressort à barre de torsion (9) est disposé de façon pivotante au niveau du châssis (2).

9. Véhicule selon l'une quelconque des revendications 6 à 8, **caractérisé en ce que** deux ressorts à barre de torsion (9) sont prévus, ceux-ci étant respectivement reliés à deux barres (5).

10. Véhicule selon la revendication 9, **caractérisé en ce que** les ressorts à barre de torsion (9) sont pour l'essentiel alignés ou croisés les uns par rapport aux autres dans la direction de conduite.

11. Véhicule selon l'une quelconque des revendications 6 à 10, **caractérisé en ce que** chaque ressort à barre de torsion (9) est disposé dans des paliers en caoutchouc (10) prévus au niveau du châssis (2).

12. Véhicule selon la revendication 11, **caractérisé en ce que** les barres (5), le ressort à barre de torsion (9) et les paliers en caoutchouc (10) forment une unité (11) montable à l'avance supplémentaire.

13. Véhicule selon la revendication 12, **caractérisé en ce que** l'unité (11) englobe au moins un palier (4).

14. Véhicule selon l'une quelconque des revendications 1 à 13, **caractérisé en ce que** les barres (5) sont disposées dans des douilles en caoutchouc (12).
